# EUROPÄISCHE PATENTSCHRIFT

(11) **EP 2 155 468 B1**
(45) Veröffentlichungstag und Bekanntmachung des Hinweises auf die Patenterteilung: **12.08.2015**
(21) Anmeldenummer: 08749325.0
(22) Anmeldetag: 06.05.2008
(51) Int. Cl.: B29C 49/00, B29C 49/42, B29C 69/00, B29C 49/04, B29C 49/20, B29C 51/26, B29L 31/00

(54) **EXTRUSIONSBLASFORMMASCHINE SOWIE VERFAHREN ZUR HERSTELLUNG EINES KUNSTSTOFFHOHLKÖRPERS**
EXTRUSION BLOW MOLDING MACHINE AND METHOD FOR THE PRODUCTION OF A HOLLOW PLASTIC BODY
MACHINE DE MOULAGE-SOUFFLAGE PAR EXTRUSION ET PROCÉDÉ DE FABRICATION D'UN CORPS CREUX EN MATIÈRE PLASTIQUE

(30) Priorität: 20.06.2007 DE 102007028882
(43) Veröffentlichungstag der Anmeldung: 24.02.2010
(73) Patentinhaber: Kautex Textron GmbH & Co. KG, 53229 Bonn (DE)
(72) Erfinder: FRANKE-MAINTZ, Matthias, 53773 Hennef (DE); MAIER, Klaus, 53797 Lohmar (DE); PRITZ, Frank, 57539 Roth (DE)
(74) Vertreter: Kierdorf Ritschel
(86) Internationale Anmeldenummer: PCT/EP2008/003598
(87) Internationale Veröffentlichungsnummer: WO 2008/154987

(56) Entgegenhaltungen:
- EP-A- 1 110 697
- EP-A- 1 334 817
- EP-A2- 1 967 351
- DE-U1-202006 013 751
- GB-A- 1 410 215
- JP-A- 2 081 621
- JP-A- 9 001 640
- JP-A- 60 125 633
- US-A1- 2002 105 115

## Beschreibung

Die Erfindung betrifft eine Extrusionsblasformmaschine sowie ein Verfahren zur Herstellung eines Kunststoffhohlkörpers unter Verwendung einer solchen Extrusionsblasformmaschine.

Extrusionsblasformmaschinen umfassen üblicherweise einen oder mehrere Extruder zur Plastifizierung von thermoplastischem Kunststoff, wenigstens einen Extrusionskopf zur Erzeugung eines schlauch- oder bahnförmigen Kunststoffvorformlings sowie ein Formwerkzeug, in welchem der Kunststoffvorformling unter Differenzdruck, d. h. mittels Vakuum- und/oder Gasdruckbeaufschlagung zu einem Hohlkörper aufgeweitet wird. Das geschlossene Formwerkzeug umfasst eine Kavität, die die Gestalt des fertigen Artikels definiert.

Der Extrusionskopf kann entweder unmittelbar oberhalb des Formwerkzeugs angeordnet sein, oder das Formwerkzeug kann zu diesem hin und von diesem weg verfahrbar ausgebildet sein.

Alternativ ist es möglich, den oder die Vorformlinge mittels bekannter Handhabungsvorrichtungen, beispielsweise mittels Schlauchgreifer, am Extrusionskopf zu übernehmen und zu dem ortsfest neben dem Extrusionskopf angebrachten Formwerkzeug zu verbringen bzw. dort zu übergeben.

Durch Extrusionsblasformen werden überwiegend Hohlkörper, wie beispielsweise Falschen, Stoßdämpfer, Heizöltanks, Fässer sowie Kraftstoffbehälter, hergestellt. Bei großen technischen Bauteilen, wie beispielsweise Kraftstoffbehältern für Kraftfahrzeuge, sind in den Bauteilen Einbauten vorzusehen, die vorzugsweise während der Ausformung der Hohlkörper eingebracht werden. Zu diesem Zweck werden teilweise bahnförmige Vorformlinge in der ersten Hitze zu geschlossenen Behältern umgeformt. Zur Herstellung bahnförmiger Vorformlinge kann das zunächst schlauchförmig hergestellte Extrudat nach Austritt aus dem Extrusionskopf an diametral gegenüberliegenden Stellen aufgetrennt werden und mittels einer hierfür vorgesehenen Handhabungseinrichtung zu gestreckten Bahnen ausgebreitet werden. Alternativ kann bereits innerhalb des Extrusionskopfs der schlauchförmige Schmelzestrom in eine bahnförmige Gestalt gebracht werden und über eine oder mehrere Breitschlitzdüsen am Extrusionskopf ausgegeben werden. Diese Vorgehensweise hat den Vorzug, dass ein nachträgliches Auftrennen des Schlauches nicht mehr erforderlich ist. Es ist beispielsweise bekannt, den schlauch- oder tubusförmigen Schmelzstrom innerhalb des Extrusionskopfes auf zwei Breitschlitzdüsen an einem Extrusionskopf aufzuteilen. Der verfahrenstechnische Vorzug dieser Vorgehensweise liegt auf der Hand. Innerhalb eines Extrusionszyklus werden zwei Vorformlinge, die beispielsweise zwei Schalen eines fertigenden Hohlkörpers bilden, extrudiert. Wenn der Extrusionskopf unmittelbar oberhalb des Formwerkzeugs angeordnet werden soll, oder das Formwerkzeug zur Übernahme der Vorformlinge unter den Extrusionskopf verfahren werden soll, muss der Abstand der Breitschlitzdüsen zueinander wenigstens dem Mittenabstand der Teilungsebenen zwischen den Formwerkzeugen entsprechen. Die Umrüstung einer Extrusionsblasformmaschine auf ein anderes Werkzeug ist durch diese bauliche Gegebenheit mit vertretbarem Aufwand kaum möglich.

Sollen die Vorformlinge zum Formwerkzeug verbracht werden, ist die Manipulation der Vorformlinge verhältnismäßig umständlich.

Aus der EP 1 110 697 B1 ist ein Verfahren zum Herstellen von Hohlkörpern aus Kunststoff bekannt, bei dem ebenfalls bahnförmige Vorformlinge extrudiert werden. Zur Lösung des zuvor beschriebenen Problems wird dort vorgeschlagen, unterhalb des Extrusionskopfes eine Rollenführungseinrichtung vorzusehen, mittels derer der Abstand der Vorformlinge zueinander auf ein gewünschtes Maß eingestellt wird.

Diese Konstruktion ist mit dem Nachteil behaftet, dass ggf. die heißen Schmelzebahnen mit den Rollen der Führungseinrichtung verkleben können. Dies ist insbesondere dann problematisch, wenn die Extrusionseinrichtung nach Stillstand wieder in Betrieb genommen werden soll.

Ein Verfahren zur Herstellung von schalenförmigen Formteilen aus thermoplastischem Kunststoff ist weiterhin aus der EP 1 334 817 A1 bekannt. Das Verfahren betrifft die Extrusion eines schlauchförmigen Vorformlings, der zu zwei Materialbahnen aufgetrennt wird und mittels zwei Manipulatoren/Greifern , deren Abstand zueinander veränderbar ist, vom Extrusionskopf abgenommen und ausgebreitet wird. Während des Verfahrens werden die Materialbahnen in einem dreiteiligen Formwerkzeug zu einem im Wesentlichen geschlossenen Hohlkörper verarbeitet.

Der Erfindung liegt daher die Aufgabe zugrunde, eine Extrusionsblasformmaschine der eingangs genannten Art dahingehend zu verbessern, dass die zuvor beschriebenen Nachteile weitestgehend vermieden werden.

Die Aufgabe wird gelöst durch eine Extrusionsblasformmaschine wie sie in Anspruch 1 definiert ist.

Mit dieser Anordnung lässt sich in vorteilhafter Art und Weise der Abstand der Vorformlinge zueinander nach Übernahme durch die Handhabungseinrichtung variabel gestalten, so dass die Werkzeugabmessungen und die geometrischen Gegebenheiten des Extrusionskopfes voneinander entkoppelt sind.

Vorzugsweise ist die Handhabungsvorrichtung bzgl. des Extrusionskopfes verfahrbar und/oder schwenkbar.

Mittels der Handhabungsvorrichtung bzw. mittels der Greifer können die Vorformlinge am Extrusionskopf abgerissen werden. Hierzu ist es beispielsweise bekannt, an einer definierten Stelle der Vorformlinge eine Dünnstelle als Soll-Risslinie zu extrudieren. Alternativ kann zusätzlich eine Trenneinrichtung zum Abschneiden der Vorformlinge vorgesehen sein, nachdem diese zwischen den Klemmbacken der Greifer festgelegt wurden.

Die Greifer können beispielsweise auf dem Träger pneumatisch oder hydraulisch verstellbar sein, und zwar zwischen hierfür vorgesehenen Endanschlägen.

Die Aufgabe wird weiterhin gelöst durch ein Verfahren zur Herstellung eines Kunststoffhohlkörpers unter Verwendung einer Extrusionsblasformmaschine der vorstehend beschriebenen Art, wobei zwei bahnförmige Vorformlinge gleichzeitig mit einem gegebenen Abstand zueinander auf eine bestimmte Länge extrudiert werden, die Vorformlinge mittels der Greifer am Extrusionskopf hängend übernommen werden und die Vorformlinge an ein geöffnetes, wenigstens dreiteiliges Blasformwerkzeug übergeben werden, wobei der Abstand der Greifer zueinander vor der Übergabe an das Formwerkzeug auf den Abstand der geöffneten Teile des Werkzeugs angepasst wird. Die Variation des Abstands der Vorformlinge zueinander kann beispielsweise unmittelbar vor Übergabe an das Formwerkzeug erfolgen, und zwar in einer Bewegungspause der Handhabungseinrichtung. Alternativ ist es auch möglich, dass sich die Transportbewegung der Handhabungseinrichtung und die Relativbewegung der Greifer zueinander überlagern.

Bei einer Variante des Verfahrens gemäß der Erfindung ist die Verwendung eines Formwerkzeugs mit jeweils zwei Teilkavitäten bildenden Außenformen und mit einer Mittenform vorgesehen, wobei die Vorformlinge mittels der Handhabungseinrichtung jeweils zwischen eine geöffnete Außenform und die Mittenform platziert werden, und wobei der Abstand der Greifer wenigstens auf den Mittenabstand der Teilungsebenen zwischen den Außenformen und der Mittenform eingestellt wird.

Bei einer Variante des Verfahrens gemäß der Erfindung ist vorgesehen, dass die Formwerkzeuge in Extrusionsrichtung unterhalb des Extrusionskopfes angeordnet werden und dass die Greifer nach Übernahme der Vorformlinge in Extrusionsrichtung verfahren werden, wobei dieser Bewegung eine Querbewegung der Greifer überlagert wird.

Alternativ kann das Formwerkzeug neben dem Extrusionskopf oder räumlich entfernt zu diesem angeordnet sein, wobei die Greifer nach der Übernahme der Vorformlinge gemeinsam wenigstens quer zur Extrusionsrichtung in die Übergabestellung gefahren werden, und wobei vorzugsweise die Verstellung der Greifer zueinander der Verfahrbewegung der Handhabungsvorrichtung überlagert wird.

Die Erfindung wird nachstehend anhand von zwei in den Zeichnungen dargestellten Ausführungsbeispielen erläutert werden.

Es zeigen:
- Figur 1: eine Ansicht einer Extrusionsvorrichtung mit einer Vorrichtung zur Handhabung der Vorformlinge gemäß der Erfindung,
- Figur 2: eine Ansicht in Richtung des Pfeils II in Figur 1,
- Figur 3: einen Schnitt entlang der Linien III-III in Figur 1,
- Figur 4: eine schematische Darstellung des Bewegungsablaufs der Vorrichtung zur Handhabung der Vorformlinge in der Schnittebene IV-IV.
- Figur 5: eine schematische Ansicht der Einrichtung zur Handhabung der Vorformlinge sowie des Formwerkzeuges nach Übergabe der Vorformlinge an das Vorformwerkzeug und unmittelbar vor Übernahme zweier weiterer Vorformlinge, und
- Figur 6: eine schematische Darstellung einer alternativen Variante des erfindungsgemäßen Verfahrens.

Die Extrusionsblasformmaschine 1 gemäß der Erfindung ist in den Zeichnungen stark vereinfacht dargestellt. Diese umfasst in bekannter Art und Weise mehrere nicht dargestellte Extruder zur Aufschmelzung und Zufuhr von Kunststoffgranulat an einen Extrusionskopf 2, von dem in den Figuren nur der untere Teil mit zwei als Breitschlitzdüsen 3 ausgebildeten Düsenspalten dargestellt ist.

Innerhalb des Extrusionskopfes 2 wird das zunächst über einen oder mehrere konzentrisch zueinander angeordnete Ringspalte verteilte schmelzflüssige thermoplastische Material zu zwei bahnförmigen bzw. lappenförmigen Schmelzeströmen aufgeteilt, die als bahnförmige Vorformlinge 4 aus den Breitschlitzdüsen 3 austreten.

Konstruktionsbedingt haben die Breitschlitzdüsen 3 einen gegebenen Abstand zueinander, der nicht notwendigerweise so gewählt ist, dass die Vorformlinge 4 bereits werkzeuggerecht extrudiert werden. Der Begriff "werkzeuggerecht" wird nachstehend noch im Zusammenhang erläutert werden.

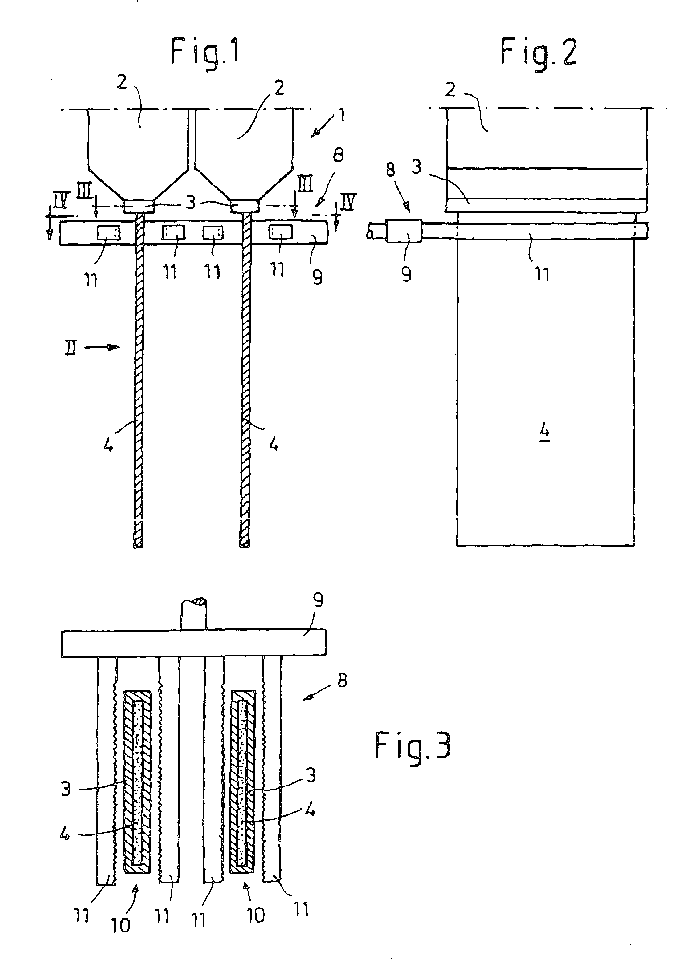

Die Extrusionsblasformmaschine umfasst zudem ein Formwerkzeug 5, das bei dem beschriebenen Ausführungsbeispiel insgesamt dreiteilig ausgebildet ist. Das Formwerkzeug 5 umfasst zwei Außenformen 5a, 5b und eine Mittenform 6, die im Sinne einer Öffnungs- und Schließbewegung voneinander weg und aufeinander zu bewegbar sind, d. h. quer, bezogen auf die Längserstreckung der in Schwerkraftrichtung extrudierten Vorformlinge 4, die beispielsweise in Figur 1 am Extrusionskopf 2 hängend dargestellt sind.

Jede der Außenformen 5a, 5b bildet eine Teilkavität 7a, 7b, die jeweils die Außenkontur eines Teils des in dem Formwerkzeug 5 zu fertigenden Hohlkörpers definiert.

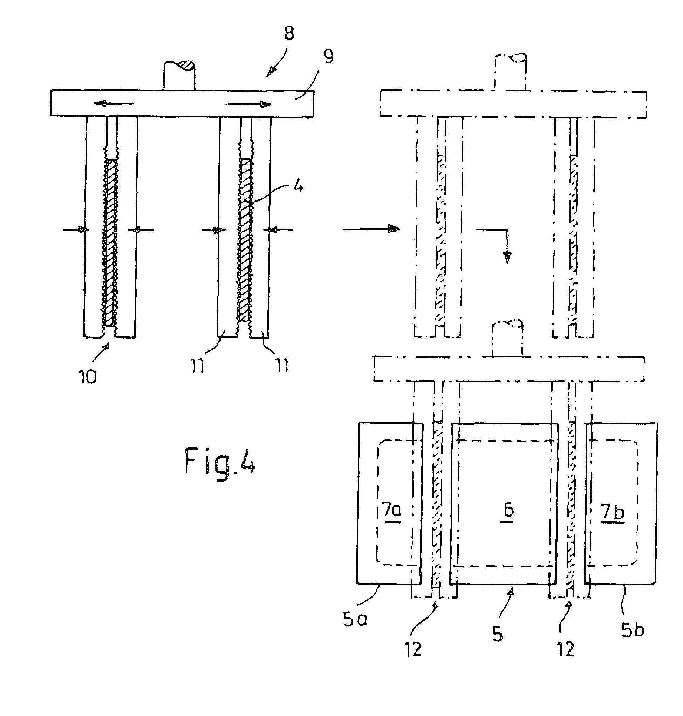

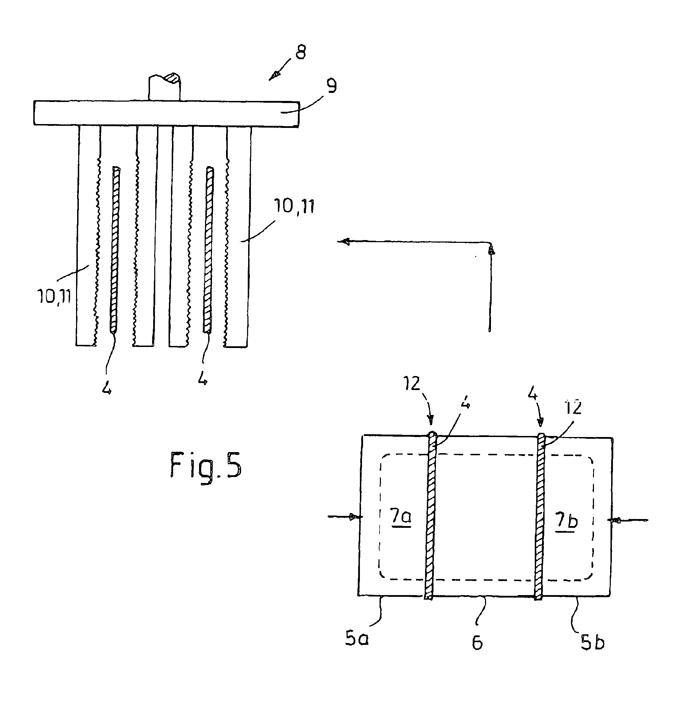

Nach Extrusion der Vorformlinge 4 auf die gewünschte Länge werden diese in das geöffnete Formwerkzeug 5 verbracht, wie dies beispielsweise in Figur 4 dargestellt ist. Innerhalb des Formwerkzeugs 5 werden die Vorformlinge 4 mittels Differenzdruck (Vakuum- und/oder Gasdruckbeaufschlagung) in den Außenformen 5a, 5b ausgeformt, nachdem das Formwerkzeug 5 wie in Figur 5 andeutungsweise dargestellt ist, geschlossen wurde.

Sodann öffnet sich das Formwerkzeug 5 wieder, die Mittenform 6 wird quer zur Öffnungs- und Schließrichtung der Außenformen 5a, 5b verfahren, so dass sich die Außenformen 5a, 5b ungehindert gegeneinander schließen können. Dabei werden die halbschalenförmigen Teile des fertigen Behälters an einem außen umlaufenden Flansch miteinander verschweißt. Nach dem Öffnen der Außenformen 5a, 5b kann der fertige Artikel entnommen werden, der Zyklus beginnt von Neuem.

Zur Handhabung der Vorformlinge 4 ist gemäß der Erfindung eine Handhabungsvorrichtung 8 vorgesehen, die als Doppelgreifer ausgebildet ist. Diese umfasst einen Träger 9, auf dem jeweils Greifer 10 mit jeweils zwei beweglichen Klemmbacken 11 angeordnet sind, zwischen denen jeweils ein Vorformling festlegbar ist.

Wie dies in den Figuren 1 bis 3 dargestellt ist, werden in dem ersten Verfahrensschritt des Herstellungsverfahrens beide Vorformlinge 4 auf die gewünschte Länge extrudiert. Dabei kann beispielsweise auch eine Wanddickensteuerung der Breitschlitzdüsen 3 vorgesehen sein, dergestalt, dass jedem Vorformling 4 ein individuelles Wanddickenprofil aufgegeben wird.

Nach vollständiger Extrusion der Vorformlinge 4 werden diese jeweils zwischen den Klemmbacken 11 der Greifer 10 festgelegt (Übernahme der Vorformlinge). Sodann werden die Vorformlinge 4 mit einer nicht dargestellten Trennvorrichtung am Extrusionskopf 2 abgetrennt. Die Handhabungsvorrichtung 8 kann die Vorformlinge 4 nun in das geöffnete Formwerkzeug 5 (Figur 4) verbringen. Bei dem in Figur 4 dargestellten Ausführungsbeispiel ist das Formwerkzeug 5 nicht unmittelbar unterhalb des Extrusionskopfes 2 angeordnet, vielmehr seitlich mit Abstand dazu, so dass die an der Handhabungsvorrichtung 8 hängenden Vorformlinge 4 mit der Handhabungsvorrichtung 8 zu dem Formwerkzeug 5 transportiert werden.

Die Vorformlinge 4 sind in der in Figur 4 dargestellten Lage jeweils in der Teilungsebene 12 zwischen einer Außenform 5a, 5b und der Mittenform 6 in das Formwerkzeug 5 einzubringen. Die Lage der Teilungsebenen 12 ist in erster Linie von der Geometrie des zu fertigenden Artikels abhängig. Diese ist auch durch die Breite der Mittenform 6 beeinflussbar, welche dazu dient, während der Ausformung der schalenförmigen Halbzeuge in dem geschlossenen Formwerkzeug 5 über nicht dargestellte Bauteilhalter, die aus der Mittenform herausfahrbar sind, Einbauteile an der noch warmplastischen Innenwandung des zu fertigenden Artikels anzubringen.

Zur Entkoppelung des bauartbedingten Abstandes der Breitschlitzdüsen 3 voneinander und der Lage der Teilungsebenen 12 des Formwerkzeuges 5 zueinander ist vorgesehen, dass die Greifer 10 auf dem Träger 9 mit einem variablen Abstand angeordnet sind, der vorzugsweise während der Transportbewegung der Handhabungsvorrichtung 8 veränderbar ist.

Bei den in den Figuren 1 bis 5 gezeigten Ausführungsbeispielen der Erfindung werden die Greifer 10 (Klemmbackenpaare) nach der Übernahme der Vorformlinge 4 auseinander gefahren, so dass der Abstand der Vorformlinge zueinander an der Handhabungsvorrichtung größer ist als der Abstand der Vorformlinge 4 in ihrer hängenden Anordnung an dem Extrusionskopf 2. Es ist für den Fachmann selbstverständlich, dass auch die umgekehrte Variante möglich ist, dass nämlich der Abstand der Teilungsebenen 12 des Formwerkzeugs 5 zueinander kleiner ist als der Abstand der Breitschlitzdüsen 3 zueinander.

In Figur 4 ist schematisch das \/erbringen der Vorformlinge 4 in das Formwerkzeug 5 dargestellt. Nach Übergabe werden die Vorformlinge 4 von den Teilen des Formwerkzeugs 5 gehalten, wie dies in Figur 5 dargestellt ist.

Die Handhabungsvorrichtung 8 wird in die Übernahmeposition zurückgefahren, wobei die Greifer 10 zueinander wieder in den Ausgangsabstand verfahren werden.

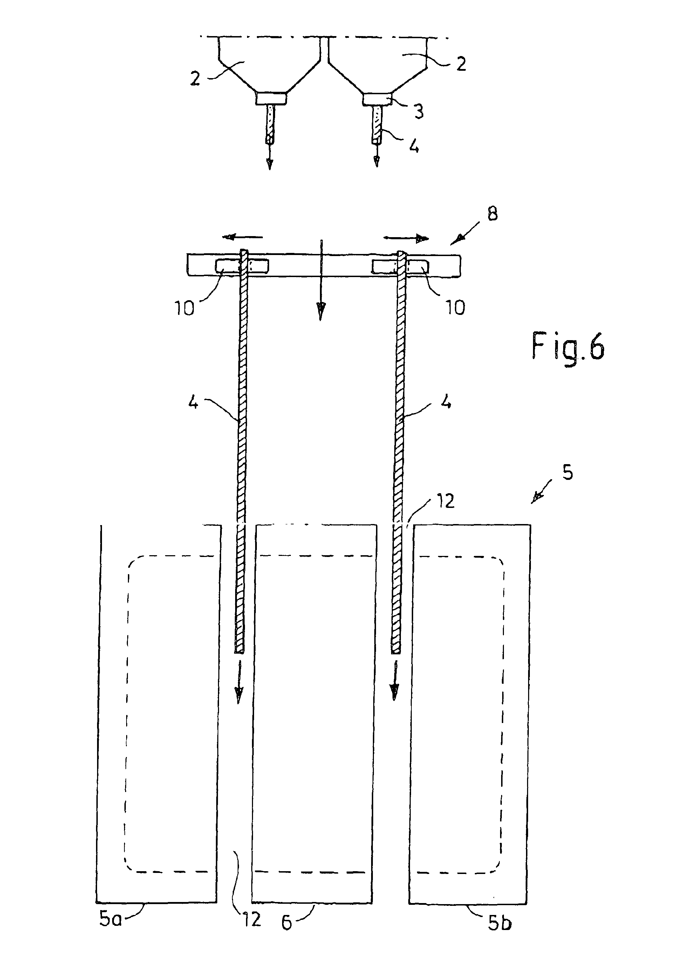

In Figur 6 ist eine Variante der Extrusionsblasformmaschine gemäß der Erfindung dargestellt, bei der das Formwerkzeug 5 unmittelbar unterhalb des Extrusionskopfes 2 angeordnet ist. Nach Übernahme der Vorformlinge 4 durch die Handhabungsvorrichtung 8 bzw. durch die Klemmbacken 11 der Greifer 10 wird der Träger 9 mit den daran befindlichen Vorformlingen nur in Gewichtskraftrichtung verfahren. Diese Bewegung wird durch eine Querbewegung der Greifer 10 zueinander, d. h. quer zur Extrusionsrichtung bzw. quer zur Gewichtskraftrichtung, überlagert, so dass schlussendlich auf diese Art und Weise der Abstand der Vorformlinge 4 zueinander auf den Abstand der Teilungsebenen 12 des Formwerkzeuges gebracht wird, bzw. eingestellt wird. Nach Übernahme der Vorformlinge 4 durch die Greifer 10 werden gleichzeitig weitere Vorformlinge 4 extrudiert (kontinuierliche Extrusion).

### Bezugszeichenliste:

- 1: Extrusionsblasformmaschine
- 2: Extrusionskopf
- 3: Breitschlitzdüse
- 4: Vorformlinge
- 5: Formwerkzeug
- 5a, 5b: Außenformen
- 6: Mittenform
- 7a, 7b: Teilkavitäten
- 8: Handhabungsvorrichtung
- 9: Träger
- 10: Greifer
- 11: Klemmbacken
- 12: Teilungsebenen

## Patentansprüche

1. Extrusionsblasformmaschine mit wenigstens einem Extruder, mit wenigstens einem Extrusionskopf (2), mit wenigstens zwei nebeneinander angeordneten jeweils als Breitschlitzdüsen (3) ausgebildeten Düsenspalten zur Extrusion bahnförmiger Kunststoffvorformlinge, mit einem dreiteiligen Formwerkzeug (5) zur Verarbeitung zweier Vorformlinge (4) zu einem im Wesentlichen geschlossenen Hohlkörper und mit einer Vorrichtung zur Handhabung der Vorformlinge (4), umfassend wenigstens zwei an einem gemeinsamen Träger (9) nebeneinander angeordnete Greifer (10) zur Aufnahme der Vorformlinge (4), wobei die Greifer (10) jeweils zwei bewegliche Klemmbacken (11) umfassen, zwischen denen jeweils ein Vorformling (4) festlegbar ist, wobei der Abstand der Greifer (10) zueinander veränderbar ist und die Greifer (10) zu einander auf dem Träger (9) von einer ersten Übernahmestellung in eine zweite Übergabestellung und umgekehrt verstellbar sind.

2. Extrusionsblasformmaschine nach Anspruch 1, **dadurch gekennzeichnet, dass** die Handhabungsvorrichtung (8) bzgl. des Extrusionskopfes (2) verfahrbar und/oder schwenkbar ist.

3. Verfahren zur Herstellung eines Kunststoffhohlkörpers unter Verwendung einer Extrusionsblasformmaschine nach einem der Ansprüche 1 oder 2, wobei zwei bahnförmige Vorformlinge gleichzeitig mit einem gegebenen Abstand zueinander auf eine bestimmte Länge extrudiert werden, die Vorformlinge mittels der Greifer am Extrusionskopf hängend übernommen werden, und die Vorformlinge an ein geöffnetes, wenigstens dreiteiliges Formwerkzeug übergeben werden, wobei der Abstand der Greifer zueinander vor der Übergabe an das Formwerkzeug auf den Abstand der Teilungsebenen des Formwerkzeugs angepasst wird.

4. Verfahren nach Anspruch 3, **gekennzeichnet durch** die Verwendung eines Formwerkzeugs mit zwei jeweils Teilkavitäten bildenden Außenformen und mit einer Mittenform, wobei die Vorformlinge mittels der Handhabungseinrichtung jeweils zwischen eine geöffnete Außenform und die Mittenform platziert werden und wobei der Abstand der Greifer wenigstens auf den Mittenabstand der Teilungsebene zwischen den Außenformen und der Mittenform eingestellt wird.

5. Verfahren nach einem der Ansprüche 3 oder 4, **dadurch gekennzeichnet, dass** die Formwerkzeuge in Extrusionsrichtung unterhalb des Extrusionskopfes angeordnet werden, und dass die Greifer nach Übernahme der Vorformlinge in Extrusionsrichtung verfahren werden, wobei dieser Bewegung eine Querbewegung der Greifer überlagert wird.

6. Verfahren nach einem der Ansprüche 4 oder 5, **dadurch gekennzeichnet, dass** das Formwerkzeug neben dem Extrusionskopf angeordnet ist und dass die Greifer nach der Übernahme der Vorformlinge gemeinsam wenigstens quer zur Extrusionsrichtung in die Übergabestellung verfahren werden, wobei vorzugsweise die Verstellung der Greifer zueinander der Verfahrbewegung überlagert wird.

## Claims

1. Extrusion blow moulding machine with at least one extruder, with at least one extrusion head (2), with at least two nozzle gaps, arranged next to each other and each designed as wide slot nozzles (3), for extruding strip-shaped plastic preforms, with a three-part mould tool (5) for processing two preforms (4) into one substantially closed hollow body, and with a device for handling the preforms (4), comprising at least two grabs (10), located on a common support (9) next to each other, for receiving the preforms (4), whereby the grabs (10) each comprise two moveable clamping jaws (11), between which one preform (4) each can be affixed, whereby the distance of the grabs (10) from each other is changeable and the grabs (10) can be adjusted relative to each other on the support (9), from a first acceptance station to a second handover station and vice versa.

2. Extrusion blow moulding machine according to claim 1, **characterised in that** the handling device (8) can be displaced and/or pivoted in relation to the extrusion head (2).

3. Method for producing a plastic hollow body, using an extrusion blow moulding machine according to one of the claims 1 or 2, whereby two strip-shaped preforms are extruded simultaneously with a given distance from each other to a specified length, the preforms accepted hanging on the extrusion head by the grabs, and the preforms transferred to an open, at least three-part mould tool, whereby the distance of the grabs from each other is adjusted to the distance between the division planes of the mould tool prior to transfer to the mould tool.

4. Method according to claim 3, **characterised by** the use of a mould tool with two external moulds, each forming part activities, and with a central mould, whereby the preforms are each placed between an open external mould and the central mould by the handling means, and whereby the distance of the grabs is set at least to the central distance of the division planes between the external moulds and the central mould.

5. Method according to one of the claims 3 or 4, **characterised in that** the mould tools are located under the extrusion head in extrusion direction, and **in that** the grabs are displaced in extrusion direction following acceptance of the preforms, whereby this movement is overlaid by a transverse movement of the grabs.

6. Method according to one of the claims 4 or 5, **characterised in that** the mould tool is located next to the extrusion head, and **in that** the grabs are displaced together into the handover position following acceptance of the preforms, at least transverse to the extrusion direction, whereby the displacement of the grabs in relation to each other preferably overlays the displacement movement.

## Revendications

1. Machine d'extrusion-soufflage, comportant au moins une extrudeuse, au moins une tête d'extrusion (2), au moins deux buses disposées côte à côte et réalisées chacune sous forme de buse à fente large (3) pour extruder en forme de bande des paraisons en matière plastique, un outil de moulage (5) en trois parties pour le traitement de deux paraisons (4) en vue d'obtenir un corps creux sensiblement fermé, et un dispositif pour la manutention des paraisons (4), comportant au moins deux grappins (10) disposés côte à côte sur un support (9) commun et destinés à recevoir les paraisons (4), lesdits grappins (10) comportant chacun deux mâchoires de serrage (11) mobiles, entre lesquelles peut être fixée respectivement une paraison (4), la distance entre les grappins (10) pouvant être modifiée et les grappins (10) pouvant être déplacés l'un par rapport l'autre sur le support (9) à partir d'une première position de réception vers une deuxième position de transfert et inversement.

2. Machine d'extrusion-soufflage selon la revendication 1, **caractérisée en ce que** le dispositif de manutention (8) peut être déplacé et/ou peut pivoter par rapport à la tête d'extrusion (2).

3. Procédé pour la réalisation d'un corps creux en matière plastique moyennant l'utilisation d'une machine d'extrusion-soufflage selon la revendication 1 ou 2, dans lequel procédé deux paraisons en forme de bande sont extrudées en même temps sur une longueur déterminée à une distance donnée l'une de l'autre, les paraisons suspendues à la tête d'extrusion étant saisies par les grappins, et les paraisons étant transférées dans un outil de moulage ouvert, réalisé au moins en trois parties, la distance entre les grappins avant le transfert dans l'outil de moulage étant ajustée à la distance entre les plans de joint de l'outil de moulage.

4. Procédé selon la revendication 3, **caractérisé par** l'utilisation d'un outil de moulage comportant deux moules extérieurs, formant chacun une cavité partielle, et comportant un moule central, les paraisons étant placées au moyen du dispositif de manutention chacune entre un moule extérieur ouvert et le moule central et la distante entre les grappins étant réglée au moins sur la distance moyenne du plan de joint entre les moules extérieurs et le moule central.

5. Procédé selon la revendication 3 ou 4, **caractérisé en ce que** les outils de moulage sont disposés, par référence au sens d'extrusion, en dessous de la tête d'extrusion, et **en ce que** les grappins après la réception des paraisons sont déplacés dans le sens d'extrusion, un mouvement transversal des grappins étant superposé à ce mouvement.

6. Procédé selon la revendication 4 ou 5, **caractérisé en ce que** l'outil de moulage est disposé à côté de la tête d'extrusion, et **en ce que** les grappins après la réception des paraisons sont déplacés conjointement au moins transversalement au sens d'extrusion dans la position de transfert, de préférence le réglage des grappins l'un par rapport l'autre étant superposé au mouvement de déplacement.
